# EUROPÄISCHE PATENTANMELDUNG

(11) **EP 4 382 560 A1**
(43) Veröffentlichungstag der Anmeldung: **12.06.2024**
(21) Anmeldenummer: 23208398.0
(22) Anmeldetag: 07.11.2023
(51) Int. Cl.: C08J 9/00, C08J 9/10, C08L 23/06, C08L 67/02, B29C 44/00

(54) **SCHAUM AUF BASIS VON THERMOPLASTISCHEN COPOLYESTERELASTOMEREN UND THERMOPLASTISCHEN POLYOLEFINELASTOMEREN**

(30) Priorität: 08.12.2022 DE 102022213318
(71) Anmelder: Benecke-Kaliko AG, 30419 Hannover (DE)
(72) Erfinder: Dötzer, Martin, 30165 Hannover (DE); Mani, Joseph, 30165 Hannover (DE); Zandjio, Jeovie Sorel, 30165 Hannover (DE)
(74) Vertreter: Continental Corporation

(57) **Zusammenfassung**

Beschrieben wird ein Schaum auf Basis einer Mischung, umfassend mindestens ein thermoplastisches Copolyesterelastomer, mindestens ein thermoplastisches Polyolefinelastomer und mindestens einen Phasenvermittler, ein Verfahren zur Herstellung eines Schaums auf einer Mischung, umfassend mindestens ein thermoplastisches Copolyesterelastomer, mindestens ein thermoplastisches Polyolefinelastomer und mindestens einen Phasenvermittler, den Schaum erhältlich durch dieses Verfahren, ein Schaumfolienlaminat, umfassend einen Schaum auf Basis einer Mischung, umfassend mindestens ein thermoplastisches Copolyesterelastomer, mindestens ein thermoplastisches Polyolefinelastomer und mindestens einen Phasenvermittler sowie spezielle Verwendungen davon.

## Beschreibung

Die vorliegende Erfindung betrifft einen Schaum auf Basis einer Mischung, umfassend mindestens ein thermoplastisches Copolyesterelastomer, mindestens ein thermoplastisches Polyolefinelastomer und mindestens einen Phasenvermittler, ein Verfahren zur Herstellung eines Schaums auf einer Mischung, umfassend mindestens ein thermoplastisches Copolyesterelastomer, mindestens ein thermoplastisches Polyolefinelastomer und mindestens einen Phasenvermittler, den Schaum erhältlich durch dieses Verfahren, ein Schaumfolienlaminat, umfassend einen Schaum auf Basis einer Mischung, umfassend mindestens ein thermoplastisches Copolyesterelastomer, mindestens ein thermoplastisches Polyolefinelastomer und mindestens einen Phasenvermittler sowie spezielle Verwendungen davon.

Kunststoff-Schaummaterialien, insbesondere in Form von Schaumfolien bzw. Schaumfolienlaminaten, werden unter anderem bei der Türbrüstung im Automobilinnenraum eingesetzt. Ein solches Schaumfolienlaminat besitzt einen mehrschichtigen Aufbau. Das Herzstück des Aufbaus bildet eine Schaumfolie.

Schaumfolien für die Türbrüstung im Automobilinnenraum basieren nach dem Stand der Technik hauptsächlich auf thermoplastischen Elastomeren auf Olefin-Basis (TPO). Für die Herstellung einer Schaumfolie wird in der Regel zunächst eine kompakte, treibmittelhaltige Folie extrudiert. Diese wird im nächsten Schritt durch Elektronenstrahlung vernetzt. Zuletzt wird die vernetzte, kompakte Folie in einem Schaumofen geschäumt.

Die Schaumfolie ist für die Rückstellfähigkeit einer durch mechanische Beanspruchung erzeugten Delle verantwortlich. Eine mechanische Beanspruchung kann z.B. ein aufgestützter Ellenbogen sein. Die mechanische Beanspruchung erfolgt vier Stunden lang. Nach der Entlastung der Schaumfolie hat die erzeugte Delle 24 Stunden Zeit zurückzustellen.

Bekannte Schaumfolienlaminate, umfassend eine Schaumfolie auf Basis von TPO haben umfassen häufig Polypropylen um eine Wärmeformstabilität von mindestens 120°C zu gewährleisten. Diese Schäume zeigen jedoch ein schlechtes elastisches Rückstellverhalten unter Langzeitdruckbelastung. Beispielsweise durch Belastung mit dem Ellenbogen beim Auflegen des Armes auf der Türbrüstung eines Kraftfahrzeuges (Auto) können Fahrer und Beifahrer Dellen in der Schaumfolie erzeugen, die sich nicht wieder zurückstellen

Ferner weisen TPO basierte Schaumfolienlaminate eine harte Haptik bei temperaturbeständigeren Schäumen auf.

Es sind ferner Schaumfolien, beispielsweise für die Türbrüstung im Automobilinnenraum bekannt, die auf mindestens einem thermoplastischen Copolyesterelastomer basieren. Durch den Einsatz von thermoplastischen Copolyesterelastomeren kann ein Schaum erzeugt werden, der sowohl mindestens 120°C Wärmeformstabilität mitbringt und auch ein verbessertes elastisches Rückstellverhalten zeigt.

Allerdings ist der Einsatz von thermoplastischen Copolyesterelastomeren mit recht hohen Kosten verbunden.

So beschreibt die EP 1 940 609 A1 Kunststoff-Schaummaterial auf der Basis von Polyolefinen und deren Einsatz in Kraft- und Luftfahrzeugen.

Die EP 1 752 485 A1 offenbart ebenfalls Kunststoff-Schaummaterial auf der Basis von Polyolefinen, die sich durch hohe Hitzebeständigkeit auszeichnen.

Die DE 10 2017 203 967 A1 beschreibt Kunststofffolienlaminate, umfassend eine ein- oder mehrlagige Oberfolie und eine Schaumschicht, wobei die Schaumschicht eine Schaumschicht auf Basis von Polyolefinen ist, sowie einen Formkörper, umfassend ein solches Kunststofffolienlaminat.

Die EP 1 295 698 A1 offenbart ein Verfahren zum Verbessern von mechanischen, thermischen und chemischen Eigenschaften von aus thermoplastischen Elastomeren auf Basis von Polyester-Copolymeren vernetzungsmittelfrei hergestellten und unvernetzten Formkörpern.

Die DE 10 2020 212 800 A1 beschreibt einen Schaum auf Basis von mindestens einem thermoplastischen Copolyesterelastomer.

Es war daher die Aufgabe der vorliegenden Erfindung die Nachteile des Standes der Technik zu beheben. Insbesondere sollte ein Schaum bereitgestellt werden, der hinsichtlich der Rückstellfähigkeit gegenüber dem Stand der Technik verbessert ist und/oder eine verbesserte Haptik aufweist. Insbesondere sollte 24 h nach der Belastung keine Verformung mehr sichtbar sein. Ferner soll der Schaum möglichst kostengünstig zu produzieren sein, was insbesondere durch den Einsatz kostengünstiger Edukte, bzw. durch das Ersetzen von kostenintensiven Edukten, gewährleistet werden sollte.

Diese Aufgabe wurde überraschend durch einen Schaum gemäß Anspruch 1 gelöst, d. h. durch einen Schaum auf Basis einer Mischung, umfassend mindestens ein thermoplastisches Copolyesterelastomer, mindestens ein thermoplastisches Polyolefinelastomer und mindestens einen Phasenvermittler.

Vorteilhafte Weiterbildungen sind in den Unteransprüchen beschrieben.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Mit "parts per hundred rubber" (phr) werden in der elastomerchemischen Industrie die Massenanteile der einzelnen Mischungsbestandteile in einem Rezept einer Elastomermischung bezeichnet. Diese Angaben werden jeweils auf 100 Massenteile des Grundpolymers oder der Grundpolymere (bei Polymerblends) bezogen.

Erfindungsgemäß ist demnach ein Schaum auf Basis einer Mischung, umfassend mindestens ein thermoplastisches Copolyesterelastomer, mindestens ein thermoplastisches Polyolefinelastomer und mindestens einen Phasenvermittler.

Der erfindungsgemäße Schaum zeichnet sich durch eine verbesserte Rückstellfähigkeit aus. Ferner weist der erfindungsgemäße Schaum eine verbesserte Haptik auf. Zudem ist der Schaum kostengünstig herzustellen, da Teile des kostenintensiven thermoplastischen Copolyesterelastomers durch die kostengünstigeren thermoplastischen Polyolefinelastomere ersetzt werden können, ohne dass die mechanischen Eigenschafen des Schaumes sich nennenswert verschlechtern. Die Mischbarkeit von thermoplastischen Copolyesterelastomeren und thermoplastischen Polyolefinelastomeren wird erfindungsgemäß durch einen Phasenvermittler verbessert.

Thermoplastische Copolyesterelastomere (TPC oder TPE-E) umfassen Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen. Im Idealfall weisen die thermoplastischen Copolyesterelastomere die Kombination der Gebrauchseigenschaften von Elastomeren und die Verarbeitungseigenschaften von Thermoplasten auf. Dies kann dadurch erreicht werden, dass in dem TPC gleichzeitig weiche und elastische Segmente mit hoher Dehnbarkeit und niedriger Glasübergangstemperatur sowie harte, kristallisierbare Segmente mit geringer Dehnbarkeit, hoher Glasübergangstemperatur und Neigung zur Assoziatbildung vorliegen. Die Weich- und Hartsegmente sollten dabei miteinander unverträglich sein und als individuelle, sich nicht durchdringende Phasen vorliegen.

Die DIN EN ISO 18064 (03/2015) definiert thermoplastische Copolyesterelastomere als ein thermoplastisches Elastomer "das aus einem Blockcopolymer abwechselnder harter und weicher Segmente besteht, wobei die chemische Verknüpfung in der Hauptkette durch Ether- und/oder Estergruppen erfolgt." Demnach handelt es sich bei thermoplastischen Copolyesterelastomeren um Multiblockcopolymere. Die Hartsegmente bilden kristalline Polyestersegmente.

Über diese werden die physikalischen Vernetzungsbereiche der Hartphase ausgebildet. Häufig handelt es sich dabei um Polybutylenterephthalat (PBT). Anhand der Verknüpfungen in den Weichsegmenten werden TPC nach der DIN EN ISO 20029-1 (05/2018) unterteilt in:
- TPC-ES Polyester-Weichsegment,
- TPC-ET Polyether-Weichsegment,
- TPC-EA Alkan-Weichsegment und
- TPC-XY Nicht festgelegt

Die dominierende Type sind dabei die TPC-ET. Diese zeigen die beste Hydrolysebeständigkeit der aufgezeigten Typen. Bei TPC-ET ist das amorphe Weichsegment aus einer langen Polyalkylenetherglykol-Einheit und damit veresterten Dicarbonsäuren aufgebaut. Dabei handelt es sich häufig um Polytetramethylenetherglykolterephthalat. Nach der DIN EN ISO 20029-1 ist für die Bezeichnung "TPC-ET" die lange Polyalkylenetherglykol-Einheit entscheidend. Damit basieren bei TPC-ET die Hartsegmente auf Ester- und die Weichsegmente weitgehend auf Etherverknüpfungen. TPC-ET werden daher auch als thermoplastische Polyether / Ester-Copolymer-Elastomere bezeichnet. TPC-ET werden durch eine Polykondensationsreaktion in der Schmelze hergestellt. Die gängigsten Ausgangsprodukte sind kurzkettige Diole, Terephthalsäuredialkylester und Polyalkylenetherglykole. Konkret handelt es sich in den meisten Fällen um 1,4-Butandiol, Terephthalsäuredimethylester und Polytetramethylenetherglykol (Polytetrahydrofuran). Die Umesterungsreaktion erfolgt in unterschiedlichen Mengenverhältnissen des Terephthalsäuredialkylesters mit dem kurzkettigen Diol und dem Polyalkylenetherglykol. Mit den genannten konkreten Ausgangsprodukten bilden sich die Blockcopolymere mit Segmenten aus Polybutylenterephthalat und Polytetramethylenetherglykolterephthalat. Über die genannten Mengenverhältnisse wird die Sequenzlänge der Hart- und Weichsegmente und damit die Eigenschaften der TPC-ET gesteuert. Durch die Variation der Polyalkylenetherglykole können die TPC-ET modifiziert werden. Beispielsweise ist ein Austausch von Polytetramethylenetherglykol durch Polyethylenglykol oder Polypropylenglykol zu nennen. Auch durch einen Austausch der Terephthalsäure z.B. durch Isophthalsäure oder Sebazinsäure ist eine Modifizierung möglich.

Das thermoplastische Copolyesterelastomer weist vorzugsweise eine Shore-Härte von 25 bis 65 D, insbesondere eine Shore-Härte von 25 bis 65 D nach 15 Sekunden, vorzugsweise von 35 bis 55 D, insbesondere von 35 bis 55 D nach 15 Sekunden, auf.

Die Shore-Härte wird gemäß DIN ISO 7619-1 (02/2012) bestimmt.

Der erfindungsgemäße Schaum ist vorzugsweise dadurch gekennzeichnet, dass das thermoplastische Copolyesterelastomer Polyether-Weichsegmente und Polyester-Hartsegmente aufweist.

Als thermoplastische Copolyesterelastomere (TPC) werden insbesondere solche mit Polyether-Weichsegment (TPC-ET) eingesetzt. Bevorzugt basieren die Weichsegmente auf Polytetramethylenetherglykolterephthalat oder Polypropylenetherglykolterephthalat. Die Hartsegmente basieren bevorzugt auf Polybutylenterephthalat (PBT).

Geeignete thermoplastische Copolyesterelastomere sind beispielsweise unter den Handelnsnamen Hytrel von DuPont, Riteflex/Pibiflex von Celanese oder Kebaflex von Barlog erhältlich.

Der erfindungsgemäße Schaum ist vorzugsweise dadurch gekennzeichnet, dass die Schmelztemperatur des thermoplastischen Copolyesterelastomers im Bereich von 140 °C bis 190 °C, vorzugsweise im Bereich von 150 bis 170 °C, liegt.

Der erfindungsgemäße Schaum ist vorzugsweise dadurch gekennzeichnet, dass die Dichte des thermoplastischen Copolyesterelastomers im Bereich von 1060 bis 1300 kg/m³, vorzugsweise im Bereich von 1150 bis 1260 kg/m³, liegt.

Der erfindungsgemäße Schaum ist vorzugsweise dadurch gekennzeichnet, dass der Schmelzflussindex (MFR) des thermoplastischen Copolyesterelastomers im Bereich von 1 bis 13 g/10min bei 190 °C und 2,16 kg, vorzugsweise im Bereich von 1 bis 6 g/10min bei 190 °C und 2,16 kg, liegt.

Der erfindungsgemäße Schaum ist vorzugsweise dadurch gekennzeichnet, dass der Biegemodul des thermoplastischen Copolyesterelastomers im Bereich von 15 bis 180 MPa, vorzugsweise im Bereich von 60 bis 170, liegt. Der Biegemodul wird gemäß DIN EN ISO 178 (2013-09) bestimmt.

Der erfindungsgemäße Schaum ist vorzugsweise dadurch gekennzeichnet, dass das mindestens eine thermoplastische Polyolefinelastomer mindestens ein LLDPE umfasst.

LLDPE ist hierbei die Abkürzung (abgeleitet von englisch linear low density polyethylene) für Polyethylen mit niedriger Dichte und linearer Struktur. Anstelle von LLDPE wird auch die Bezeichnung PE-LLD verwendet (DIN EN ISO 1043-1: 2002-06).

Der eingesetzte Phasenvermittler ist im Wesentlichen nicht beschränkt, sondern umfasst alle Moleküle, insbesondere Polymere, die die Mischbarkeit des mindestens einen thermoplastischen Copolyesterelastomer und des mindestens einen thermoplastische Polyolefinelastomer verbessern. Hierbei sind insbesondere Polymere mit einem polaren Anteil, wie EVA, EBA, EMA und/oder EAA geeignet.

Der erfindungsgemäße Schaum ist vorzugsweise dadurch gekennzeichnet, dass der mindestens eine Phasenvermittler mindestens ein Ethylenvinylacetat (EVA) umfasst.

Ethylenvinylacetate, auch bekannt unter der Bezeichnung Ethylen-VinylacetatCopolymere, sind Copolymere aus Ethen und Vinylacetat. Diese beiden Monomere lassen sich insbesondere radikalisch initiiert in beliebigen Mengenverhältnissen copolymerisieren. Dabei resultieren Copolymere mit statistischer Anordnung der Monomerbausteine in den Polymerketten.

Vorzugsweise umfasst das mindestens eine Ethylenvinylacetat ein Ethylenvinylacetat mit einem Vinylacetatanteil von 18 bis 40%.

Vorzugsweise sind neben dem mindestens einen thermoplastischen Copolyesterelastomer, dem mindestens einen thermoplastische Polyolefinelastomer und dem mindestens einen Phasenvermittler, sofern dieser ein Polymer umfasst, keine weiteren Polymere in der Mischung enthalten.

Der erfindungsgemäße Schaum ist vorzugsweise dadurch gekennzeichnet, dass die Mischung von 20 bis 70 phr, vorzugsweise von 30 bis 60 an dem mindestens einem thermoplastisches Copolyesterelastomer enthält.

Der erfindungsgemäße Schaum ist vorzugsweise dadurch gekennzeichnet, dass die Mischung von 20 bis 70 phr, vorzugsweise von 30 bis 60 an dem mindestens einem ein thermoplastischen Polyolefinelastomer enthält.

Der erfindungsgemäße Schaum ist vorzugsweise dadurch gekennzeichnet, dass die Mischung von 1 bis 20 phr, vorzugsweise von 5 bis 10 phr an dem mindestens einen Phasenvermittler enthält.

Der erfindungsgemäße Schaum ist vorzugsweise dadurch gekennzeichnet, dass die Dichte des thermoplastischen Copolyesterelastomers im Bereich von 1060 bis 1300 kg/m³, vorzugsweise im Bereich von 1150 bis 1260 kg/m³, liegt.

Der erfindungsgemäße Schaum ist vorzugsweise dadurch gekennzeichnet, dass die Eindringtiefe (Standardweg) des Kunststoff-Schaummaterials größer / gleich 0,1 mm bei 10 N und größer / gleich 0,47 mm bei 40 N liegt, vorzugsweise größer / gleich 0,15 mm bei 10 N und größer / gleich 1,42 mm bei 40 N, liegt. Die Bestimmung des Griff-Eindrückwegs bzw. Standardwegs erfolgt wie in der VDA 237-101 beschrieben und wird auch in der vorliegenden Beschreibung noch näher erläutert.

Der erfindungsgemäße Schaum kann ferner verschiedene Kunststoff-Additive, wie Vernetzungshilfsmittel, thermisch zersetzbare chemische Treibmittel, Antioxidationsmittel, Lichtschutzmittel, Pigmente, Stabilisatoren, Gleitmittel, Flammschutzmittel, UV-Absorber und/oder Füllstoffe, enthalten.

Diese können bereits den unterschiedlichen Ausgangspolymeren beigemischt sein, werden jedoch meistens bei der Herstellung der Polymermischung hinzugegeben.

Vorzugsweise enthält der Schaum 0 bis 4 phr, insbesondere größer 0 bis 4 phr, vorzugsweise von 0,5 bis 2 phr eines Vernetzungshilfsmittels.

Bevorzugt werden Vernetzungshilfsmittel eingesetzt, wenn TPC-Polymere bei denen die Weichsegmente auf Polypropylenglykol basieren, geschäumt werden.

Basieren die Weichsegmente auf Polytetramethylenetherglykol wird in einer bevorzugten Ausführungsform ein Vernetzungshilfsmittel eingesetzt.

Basieren die Weichsegmente auf Polytetramethylenetherglykol wird in einer anderen Ausführungsform kein Vernetzungshilfsmittel eingesetzt.

Geeignete Vernetzungshilfsmittel umfassen beispielsweise Divinylbenzol, Ethylvinylbenzol, Trimethylolpropantriacrylat, Trimethylolpropantrimethacrylat, 1,6-Hexandioldiacrylat, 1,2,4-Triallyl-trimellitat, Polyetheracrylate, Polyesteracrylate und/oder Triallylisocyanurat. Bevorzugt ist hierbei Trimethylolpropantrimethacrylat.

Für die Zwecke der Erfindung ist es bevorzugt, dass bei der Herstellung des angestrebten Kunststoff-Schaummaterials ein thermisch zersetzbares Schaummittel eingebunden ist.

Das thermisch zersetzbare chemische Treibmittel umfasst vorzugsweise ein Azodicarbonamid, Benzolsulfonylhydrazid und/oder Toluolsulfonylhydrazid, Natriumhydrogencarbonat, Zitronensäure oder ausgewählte Salze der Zitronensäure, wie Mononatriumcitrat, oder Mischungen davon. Bevorzugt ist hierbei Azodicarbonamid.

Das thermisch zersetzbare chemische Treibmittel ist vorzugsweise in einer Menge von 3 bis 15 phr, vorzugsweise in einer Menge von 5 bis 8 phr, vorhanden.

Der erfindungsgemäße Schaum kann ferner verschiedene übliche Kunststoff-Additive, wie Antioxidationsmittel, Lichtschutzmittel, Pigmente, Stabilisatoren, Gleitmittel, Flammschutzmittel, UV-Absorber und/oder Füllstoffe, enthalten.

Allgemeine Stabilisatoren werden vorzugsweise in Mengen zwischen 0,1 bis 0,5 phr zugesetzt. Pigmente, insbesondere Ruß, werden vorzugsweise in Mengen zwischen 0,5 bis 2 phr eingesetzt. Der Gleitmittelanteil liegt in der Regel zwischen 1 bis 3 phr.

Gemäß einem weiteren Vorschlag der Erfindung wird ein unvernetzter Schaum mit energiereichen ionisierenden Strahlen, vorzugsweise Elektronenstrahlen, vorzugsweise mit einer Strahlendosis von 20 bis 150 kGy, teilvernetzt, wobei ein vernetzter Anteil des Kunststoff-Schaummaterial erreicht wird, sodass der Gel-Anteil bzw. der vernetzte Anteil 80% oder weniger als 80% beträgt.

Vorzugsweise beträgt der Gel-Anteil bzw. der vernetzte Anteil
5 bis 80%, vorzugsweise 10 bis 60%.

Der vernetzte Anteil des Copolyesterelastomers lässt sich beispielsweise dadurch bestimmen, dass das teilvernetzte Copolyesterelastomer mit Lösungsmitteln (z.B. Cyclohexanon, Anisol oder Dihydropyran) behandelt wird, so dass vernetzte Anteile als Gel zurückbleiben und aus der Menge des Gels Rückschlüsse auf den vernetzten Anteil geschlossen werden, so dass sich aus dem Gelgehalt der vernetzte Anteil ergibt. Die Bestimmung des vernetzten Anteils kann auch nach DIN 16892 (10/2019) erfolgen.

Der erfindungsgemäße Schaum ist vorzugsweise dadurch gekennzeichnet, dass eine gemessenen Enddelle kleiner als 0,61 mm bevorzugt kleiner als 0,40 mm ist.

Zur Bestimmung der Enddelle wird eine Probe mit 30 N Druck bzw. mit einem 3 kg schwerem, zylinderförmigem Gewicht über einen Zeitraum von 4 Stunden belastet. Die Spitze des Zylinders ist halbkugelförmig mit einem Radius von 2 cm abgerundet.

So wird eine Delle erzeugt, und ihr anschließend 24 Stunden Zeit zum Zurückstellen gegeben.

Als Kenngröße wird die Initialdelle direkt nach der Entlastung und die Enddelle nach 24 Stunden Entlastung angegeben.

Die Dellentiefe der Initialdelle und der Enddelle werden mit einem Dickentaster bestimmt. Hierzu wird der Dickentaster zunächst auf einer unbelasteten Stelle auf der Schaumoberfläche aufgesetzt und der Nullpunkt festgelegt. Anschließend wird der Dickentaster an dem Tiefpunkt der Delle positioniert und abgesetzt und ausgehend vom festgelegten Nullniveau die Dellentiefe der Initialdelle bzw. der Enddelle bestimmt. Der Messwert der Initialdelle und der Enddelle wird direkt nach dem Aufsetzten des Dickentasters auf der Schaumoberfläche der Delle an der Anzeige des Dickentasters abgelesen.

Der erfindungsgemäße Schaum ist vorzugsweise dadurch gekennzeichnet, dass der Schrumpf in Längs- und Querrichtung kleiner als 5 % bei 120 °C nach 24 Stunden ist. Der Schrumpf wir dabei wie vorstehend beschrieben, bestimmt.

Der erfindungsgemäße Schaum ist vorzugsweise dadurch gekennzeichnet, dass der Standardweg bei 10 N größer als 0,10 mm und bei 40 N größer als 0,47 mm ist.

Der Griff-Eindrückweg bzw. Standardweg wird dabei wie folgt bestimmt.

Die Prüfung findet an einer Universalprüfmaschine statt. Hierzu wird die Universalprüfmaschine mit einer Auflagefläche und einem Druckstempel ausgerüstet. Die auf eine PVC-Tafel aufgeklebten Schaummuster werden mit der Schaumseite nach oben plan auf die Auflagefläche der Universalprüfmaschine gelegt. Der Druckstempel wird daraufhin in den Schaum eingedrückt. Gemessen wird die Kraft zum Eindrücken des Druckstempels gegenüber der Eindringtiefe. Die Eindringtiefe wird auch als Standardweg bezeichnet. Die Messung ist beendet, wenn die Kraft zum Eindrücken 40 N erreicht.

Als Messgröße werden neben der Messkurve die Messwerte der Eindringtiefe (Standardweg) bei einer Eindrückkraft von 10 und 40 N angegeben. Mit der Eindringtiefe bei 10 N wird die anfängliche Weichheit des Schaums bewertet. Die Eindringtiefe bei 40 N beschreibt die Weichheit des Schaums bei tieferem Eindrücken. Der Schaum ist umso weicher, je flacher die Messkurve verläuft. Ein weicher Schaum weist damit eine große Eindringtiefe bei der entsprechenden Kraft auf.

Der erfindungsgemäße Schaum ist vorzugsweise dadurch gekennzeichnet, dass der Schaum in Form eines Formkörpers, insbesondere einer Folie, insbesondere einer Schaumfolie mit einer Dicke von 0,5 bis 10 mm, vorzugsweise von 1 bis 4 mm, vorliegt.

Die vorliegende Erfindung betrifft ferner ein Verfahren zur Herstellung eines Schaums, insbesondere eines Schaums wie vorstehend beschrieben.

Die vorliegende Erfindung betrifft ferner ein Verfahren zur Herstellung eines Schaums, insbesondere eines Schaums wie vorstehend beschrieben.

Alle vorstehend für den Schaum definierten Ausführungsformen gelten dabei analog für das erfindungsgemäße Verfahren.

Das erfindungsgemäße Verfahren umfasst die Schritte:
a) Bereitstellen einer Mischung, umfassend mindestens ein thermoplastisches Copolyesterelastomer, mindestens ein thermoplastisches Polyolefinelastomer, mindestens einen Phasenvermittler, und mindestens ein chemisches Treibmittel,
b) Extrudieren der Mischung, um einen Formkörper zu erhalten,
c) Vernetzung der extrudierten Mischung und
d) Schäumen der extrudierten und vernetzen Kunststoffmischung, um einen Schaum zu erhalten.

Vorzugsweise umfasst die Mischung in Schritt a) 30 bis 60 phr mindestens einen thermoplastischen Copolyesterelastomers.

Vorzugsweise umfasst die Mischung in Schritt a) 30 bis 60 phr mindestens einen thermoplastischen Polyolefinelastomers.

Vorzugsweise umfasst die Mischung in Schritt a) 5 bis 10 phr mindestens einen Phasenverm ittlers.

Die Definitionen für das mindestens eine thermoplastische Copolyesterelastomers, für das mindestens eine thermoplastische Polyolefinelastomer und den mindestens einen Phasenvermittler sind analog zu den vorstehend beschriebenen.

Das erfindungsgemäße Verfahren ist vorzugsweise dadurch gekennzeichnet, dass die Kunststoffmischung 3 bis 15 phr, vorzugsweise 5 bis 8 phr, mindestens eines chemischen Treibmittels, wie vorstehend beschrieben, vorzugsweise Azodicarbonamid, enthält.

Das erfindungsgemäße Verfahren ist vorzugsweise dadurch gekennzeichnet, dass die Kunststoffmischung von 0 bis 4 phr, insbesondere größer 0 bis 4 phr, bevorzugt von 0,5 bis 2 phr von mindestens einem Vernetzungshilfsmittel enthält. Bevorzugt werden Vernetzungshilfsmittel eingesetzt, wenn TPC-Polymere bei denen die Weichsegmente auf Polypropylenglykol basieren, geschäumt werden.

Basieren die Weichsegmente auf Polytetramethylenetherglykol wird in einer bevorzugten Ausführungsform ein Vernetzungshilfsmittel eingesetzt.

Basieren die Weichsegmente auf Polytetramethylenetherglykol wird in einer anderen Ausführungsform kein Vernetzungshilfsmittel eingesetzt.

Geeignete Vernetzungshilfsmittel umfassen beispielsweise Divinylbenzol, Ethylvinylbenzol, Trimethylolpropantriacrylat, Trimethylolpropantrimethacrylat, 1,6-Hexandioldiacrylat, 1,2,4-Triallyl-trimellitat, Polyetheracrylate, Polyesteracrylate und/oder Triallylisocyanurat.

Die Kunststoffmischung kann ferner verschiedene übliche Kunststoff-Additive, wie Antioxidationsmittel, Lichtschutzmittel, Pigmente, Stabilisatoren, Gleitmittel, Flammschutzmittel, UV-Absorber und/oder Füllstoffe, enthalten.

Allgemeine Stabilisatoren werden vorzugsweise in Mengen zwischen 0,1 bis 0,5 phr zugesetzt. Pigmente, insbesondere Ruß, werden vorzugsweise in Mengen zwischen 0,5 bis 2 phr eingesetzt. Der Gleitmittelanteil liegt in der Regel zwischen 1 bis 3 phr.

In Schritt b) des erfindungsgemäßen Verfahrens wird die Kunststoffmischung zunächst extrudiert, um einen Formkörper zu erhalten.

Vorzugsweise wird die Kunststoffmischung extrudiert, um eine Folie, insbesondere mit einer Dicke von 0,5 bis 2 mm, vorzugsweise von 0,9 bis 1,2 mm, zu erhalten. Diese Folie kann auch als Kompaktfolie bezeichnet werden.

Es schließt sich in Schritt c) die Vernetzung des in Schritt b) erhaltenen Formkörpers, insbesondere der Kompaktfolie, an.

Diese erfolgt insbesondere mit einer ionisierenden Strahlungsquelle, vorzugsweise in Form einer Elektronenstrahlungsquelle.

Die Vernetzung erfolgt vorzugsweise mittels Elektronenstrahlvernetzung, vorzugsweise bei einer Dosis von 20 bis 150 kGy.

Vorzugsweise wird dabei so vernetzt, dass das vernetzte Kompaktmaterial einen Gel-Anteil von 80 % oder von weniger als 80%, insbesondere von 5 bis 80%, bevorzugt von 10 bis 60%, aufweist. Der Gelanteil wird dabei wie vorstehend beschrieben, bestimmt.

Anschließend wird die extrudierte, vernetzte Kunststoffmischung bzw. der vernetze Formkörper, insbesondere die vernetze Kompaktfolie, geschäumt, um einen Schaum zu erhalten.

Geeignete und aus dem Stand der Technik bekannte Schäumtechniken umfassen beispielsweise das Schäumen in einem vertikalen/horizontalen Schaumofen oder auf einem Salzbad.

Bevorzugt ist das Schäumen in einem vertikalen/horizontalen Schaumofen.

Bei dem Schäumen in einem vertikalen/horizontalen Schaumofen liegt die Temperatur in der Regel zwischen 100 und 210 °C im Vorheizkanal.

Das eigentliche Schäumen im vertikalen Schäumkanal erfolgt vorzugsweise bei Temperaturen zwischen 250 und 350 °C.

Die vorliegende Erfindung betrifft ferner einen Schaum erhältlich durch das Verfahren wie vorstehend beschrieben.

Alle oben aufgeführten bevorzugten Ausführungsformen des Schaums gelten analog für den Schaum erhältlich durch das erfindungsgemäße Verfahren.

Die vorliegende Erfindung betrifft ferner ein Schaumlaminat, insbesondere ein Schaumfolienlaminat, umfassend eine kompakte Oberfolie und eine geschäumte Unterfolie, das dadurch gekennzeichnet ist, dass die geschäumte Unterfolie einen Schaum, wie vorstehend beschrieben oder erhältlich durch das vorstehend beschriebene Verfahren, umfasst.

Alle oben aufgeführten bevorzugten Ausführungsformen des Schaums gelten analog für das Schaumlaminat, insbesondere das Schaumfolienlaminat.

Die kompakte Oberfolie weist vorzugsweise Dicken von 0,1 bis 1 mm, insbesondere von 0,5 bis 0,7 mm, auf.

Die kompakte Oberfolie kann Materialien, wie PVC, PU, TPU, TPO und/oder TPC, umfassen bzw. daraus bestehen.

Das Kaschieren der Schaumfolie mit der kompakten Oberfolie kann sowohl thermisch als auch mittels Kleben erfolgen.

Gegebenenfalls können auch weitere Schichten, wie z.B. ein Textil, mitkaschiert werden.

Häufig wird die kompakte Oberfläche zusätzlich mit einer Lackschicht ausgerüstet. Diese Lackschicht stellt dann die äußerste Schicht dar. Diese Lackschicht umfasst in der Regel einen Lack auf Polyurethan-Basis.

Die geschäumte Unterfolie in dem erfindungsgemäßen Schaumfolienlaminat weist vorzugsweise eine Dicke von 0,5 bis 10 mm, vorzugsweise von 1 bis 4 mm, auf.

Die vorliegende Erfindung betrifft ferner die Verwendung eines Schaumfolienlaminats wie vorstehend beschrieben für einen Formkörper.

Diese Verwendung betrifft insbesondere Schaumfolienlaminate, die vorzugsweise in Flugzeugen und Kraftfahrzeugen als Oberflächenmaterial für Innenverkleidungen, insbesondere Schalttafeln oder Armaturenbrettern, Säulen, Armauflagen, Kraftfahrzeugseitenverkleidungen, -türverkleidungen und -ablagen eingesetzt werden.

Es sind jedoch auch Verwendungen im Modebereich, wie bei Kleidungsstücken, Accessoires oder Schuhen, aber auch bei Möbeln und Einrichtungsgegenständen denkbar.

Insbesondere wird das erfindungsgemäße Schaumfolienlaminat für eine Innenraumverkleidung eines Kraftfahrzeuges eingesetzt.

Die Oberfolie wird vorzugsweise mit einer Narbung versehen.

Unter Narbung wird die Strukturierung der Oberfläche der Oberfolie, die wesentlich für die haptischen und visuellen Eigenschaften verantwortlich ist, verstanden. Vorzugsweise beträgt die Tiefe an mindestens einer Stelle der Narbung mindestens 10 µm. Die Erfindung betrifft daher auch ein Verfahren zur Herstellung eines Formkörpers umfassend das erfindungsgemäße Schaumfolienlaminat, wobei die Formgebung des Schaumfolienlaminats durch ein IMG-Verfahren oder ein Positiv-Tiefziehverfahren durchgeführt wird. Das Schaumfolienlaminat wird dabei in der Regel während oder nach der Formgebung auf eine Trägerstruktur aufgebracht. Bei dem IMG-Verfahren und Positiv-Tiefziehverfahren handelt es sich um im Stand der Technik bekannte Verfahren.

Beim IMG-Verfahren (InMoldGraining-Verfahren) erfolgt im Vergleich zum herkömmlichen Kaschierprozess, bei dem eine genarbte Folie auf eine Trägerstruktur mittels Vakuum aufkaschiert wird, der Narbauftrag unmittelbar vor dem Kaschierprozess. Dies erfolgt durch eine Form, die bereits die Narbstruktur enthält und diese Struktur auf die heiße Folie übergibt. Diese genarbte Folie wird in diesem vorgeformten Zustand direkt auf die Trägerstruktur appliziert. Beim Positiv-Tiefziehverfahren wird die Folie bereits beim Kaschieren mit einer Narbung, d.h. durch einen vorhergehenden Prägevorgang mit einer dreidimensionalen Oberflächenstruktur, versehen. Diese Narbung darf durch das Strecken der Folie beim Tiefziehprozess nur so verändert werden, dass die Optik des finalen Bauteils den Anforderungen des Kunden entspricht.

Die Erfindung wird nachfolgend anhand von nicht beschränkenden Beispielen näher erläutert.

### Beispiele

Es wurde eine erfindungsgemäße Schaumfolie und eine Schaumfolie als Vergleichsbeispiel mit einer Zusammensetzung gemäß Tabelle 1 hergestellt.

**Tabelle 1:**

| | | Erfindungsgemäßes Beispiel | Vergleichsbeispiel |
|---|---|---|---|
| Verbindung | | Menge [phr] | |
| TPC 1 | | 30 | |
| PP 1 | | | 25 |
| PP2 | | | 35 |
| LLDPE 1 | | | 13,5 |
| LLDPE 2 | | | 26,5 |
| LLDPE 3 | | 60 | |
| EVA 1 | | 10 | |
| ADCA | | 8 | 6,5 |
| Farbe | | 2 | 2 |
| TMPTMA | | 1 | 2 |
| Stabilisator | | 0,5 | 0,5 |
| Gleitadditiv | | 2,8 | 2,8 |

| | | | |
|---|---|---|---|
| TPC1 = TPC-ET: Dichte 1250 kg/m³, Biege-Modul 170 MPa, MVR (190 °C, 2.16 kg) = 5,2 cm³ / 10 min, Vicat-Erweichungstemperatur 130 °C, Schmelztemperatur: 165 °C, Shore D nach 15 s: 55 PP1 = Polypropylen, Random Copolymer: Dichte 900 kg/m³, Zug-Modul 1100 MPa, MFR (230 °C, 2.16 kg) = 8, Vicat-Erweichungstemperatur 139 °C PP2 = Polypropylen, Random Copolymer: Dichte 900 kg/m³, Zug-Modul 850 MPa, MFR (230 °C, 2.16 kg) = 1,8, Vicat-Erweichungstemperatur 135 °C LLDPE1 = Linear low density Polytethylen: Dichte 930 kg/m³, MFR (190 °C, 2.16 kg) = 1, Vicat-Erweichungstemperatur 117 °C LLDPE2 = Ethylen-Okten Copolymer: Dichte 902 kg/m³, Zug-Modul 8 MPa, MFR (190 °C, 2.16 kg) = 1, Vicat-Erweichungstemperatur 89 °C LLDPE3 = Linear low density Polytethylen: Dichte 857 kg/m³, MFR (190 °C, 2.16 kg) = 1, Schmelztemperatur: 38°C EVA1 = Ethylen-Vinylacetat Copolymer: Dichte 951 kg/m³, MFR (190 °C, 2.16 kg) = 3, Schmelztemperatur: 73 °C , Vinylacetat content 28% ADCA = Azodicarbonamid TMPTMA = Trimethylolpropantrimethacrylat | | | |

Die Bewertung der Rückstellfähigkeit erfolgte nach optischer und haptischer Bewertung durch min. 2 Personen nach folgenden Kriterienkatalog:
Note - Bedeutung
1 - Sehr gute Rückstellung: Delle nicht sichtbar und kaum spürbar
2 - Rückstellung akzeptabel: Delle Leicht sichtbar und leicht spürbar
3 - Schlechte Rückstellung (nicht tolerierbar): Delle noch gut sichtbar
4 - Sehr Schlechte Rückstellfähigkeit; Delle unverändert, etwa wie nach 4h Belastung

### Auswertung:

In diesen Untersuchungen zeigten sich für die Muster von Vergleichsbeispiel 1 eine Bewertung von Note 2-3. Muster aus dem erfindungsgemäßem Beispiel zeigen eine Bewertung von Note 1.

## Patentansprüche

1. Schaum auf Basis einer Mischung, umfassend mindestens ein thermoplastisches Copolyesterelastomer, mindestens ein thermoplastisches Polyolefinelastomer und mindestens einen Phasenvermittler.

2. Schaum gemäß Anspruch 1, **dadurch gekennzeichnet, dass** das thermoplastische Copolyesterelastomer Polyether-Weichsegmente und Polyester-Hartsegmente aufweist.

3. Schaum gemäß irgendeinem der vorhergehenden Ansprüche, **dadurch gekennzeichnet, dass** das mindestens eine thermoplastische Polyolefinelastomer mindestens ein LLDPE umfasst.

4. Schaum gemäß irgendeinem der vorhergehenden Ansprüche, **dadurch gekennzeichnet, dass** der mindestens eine Phasenvermittler mindestens ein Ethylenvinylacetat umfasst.

5. Schaum gemäß irgendeinem der vorhergehenden Ansprüche, **dadurch gekennzeichnet, dass** die Mischung von 20 bis 70 phr, vorzugsweise von 30 bis 60. an dem mindestens einem thermoplastisches Copolyesterelastomer enthält.

6. Schaum gemäß irgendeinem der vorhergehenden Ansprüche, **dadurch gekennzeichnet, dass** die Mischung von 20 bis 70 phr, vorzugsweise von 30 bis 60 an dem mindestens einem ein thermoplastischen Polyolefinelastomer enthält.

7. Schaum gemäß irgendeinem der vorhergehenden Ansprüche, **dadurch gekennzeichnet, dass** die Mischung von 1 bis 20 phr, vorzugsweise von 5 bis 10. an dem mindestens einen Phasenvermittler enthält.

8. Schaum gemäß irgendeinem der vorhergehenden Ansprüche, **dadurch gekennzeichnet, dass** die Dichte des Schaums im Bereich von 30 bis 200 kg/m³, vorzugsweise im Bereich von 67 bis 100 kg/m³, liegt.

9. Schaum gemäß irgendeinem der vorhergehenden Ansprüche, **dadurch gekennzeichnet, dass** der Schaum in Form eines vernetzten Schaums, insbesondere eines vernetzen Schaums mit einem vernetzten Anteil von 5 bis 80 %, vorzugsweise von 10 bis 60 %, vorliegt.

10. Schaum gemäß irgendeinem der vorhergehenden Ansprüche, **dadurch gekennzeichnet, dass** der Schaum in Form eines Formkörpers, insbesondere einer Folie mit einer Dicke von 0,5 bis 10 mm, vorzugsweise von 1 bis 4 mm, vorliegt.

11. Verfahren zur Herstellung eines Schaums, insbesondere gemäß irgendeinem der Ansprüche 1 bis 10, umfassend die Schritte:
a) Bereitstellen einer Mischung, umfassend mindestens ein thermoplastisches Copolyesterelastomer, insbesondere in einer Menge von 20 bis 70 phr, mindestens ein thermoplastisches Polyolefinelastomer, insbesondere in einer Menge von 20 bis 70 phr, mindestens einen Phasenvermittler, insbesondere in einer Menge von 1 bis 10 phr und mindestens ein chemisches Treibmittel, insbesondere in einer Menge von 3 bis 15 phr,
b) Extrudieren der Mischung, um einen Formkörper zu erhalten,
c) Vernetzung der extrudierten Mischung und
d) Schäumen der extrudierten und vernetzen Kunststoffmischung, um einen Schaum zu erhalten.

12. Verfahren gemäß Anspruch 11, **dadurch gekennzeichnet, dass** in Schritt c) mit Elektronenstrahlung, insbesondere bei einer Dosis von 20 bis 150 kGy, vernetzt wird.

13. Formkörper erhältlich durch ein Verfahren gemäß irgendeinem der Ansprüche 10 bis 12.

14. Schaumfolienlaminat, umfassend eine kompakte Oberfolie und eine geschäumte Unterfolie, **dadurch gekennzeichnet, dass** die geschäumte Unterfolie einen Schaum gemäß irgendeinem der Ansprüche 1 bis 9 oder Anspruch 13 umfasst.

15. Verwendung eines Schaumfolienlaminats gemäß Anspruch 14 für Innenverkleidungen, insbesondere Schalttafeln oder Armaturenbrettern, Säulen, Armauflagen, Kraftfahrzeugseitenverkleidungen, -türverkleidungen und -ablagen.
